# EUROPÄISCHE PATENTSCHRIFT

(11) **EP 4 105 279 B1**
(45) Veröffentlichungstag und Bekanntmachung des Hinweises auf die Patenterteilung: **03.04.2024**
(21) Anmeldenummer: 22178502.5
(22) Anmeldetag: 10.06.2022
(51) Int. Cl.: C08L 9/00, B60C 1/00, C08L 21/00

(54) **KAUTSCHUKMISCHUNG UND REIFEN**
RUBBER COMPOSITION AND TYRES
MÉLANGE DE CAOUTCHOUC ET PNEU

(30) Priorität: 18.06.2021 DE 102021206276
(43) Veröffentlichungstag der Anmeldung: 21.12.2022
(73) Patentinhaber: Continental Reifen Deutschland GmbH, 30175 Hannover (DE)
(72) Erfinder: Müller, Norbert, 30165 Hannover (DE); Pavon Sierra, Viktoria, 30165 Hannover (DE); Sà, Catarina, 30165 Hannover (DE)
(74) Vertreter: Continental Corporation

(56) Entgegenhaltungen:
- EP-A1- 3 181 631
- EP-A1- 3 932 984
- US-A1- 2017 107 360

## Beschreibung

Die Erfindung betrifft eine schwefelvernetzbare Kautschukmischung, insbesondere für den Laufstreifen von Fahrzeugluftreifen.

Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist beispielsweise eine Verbesserung des Abriebverhaltens üblicherweise mit einer Verschlechterung des Bremsverhaltens auf trockener Fahrbahn verbunden. An Laufstreifenmischungen für PKW- und Van-Reifen werden zum Beispiel höchste Anforderungen hinsichtlich des Nass- und Trockenbremsens, des Abriebwiderstands, des Cut-und-Chip-Verhaltens, des Rollwiderstands, der Haltbarkeit und des Handlings gestellt.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Mikrostruktur einzusetzen. Außerdem lassen sich Dienkautschuke modifizieren, indem Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

In der EP 0 302 505 B1 werden rußhaltige Kautschukmischungen für Reifen mit gutem Nassgriff und niedrigem Rollwiderstand beschrieben, die teilweise hydrierte lösungspolymerisierte Styrol-Butadien-Copolymere enthalten.

Aus der EP 0 775 725 B1 ist es bekannt, Kautschukmischungen für Reifen mit gutem Nassgriff, guter Verarbeitbarkeit und geringem Rollwiderstand bereitzustellen, die partiell hydrierte Styrol-Butadien-Copolymere, Kieselsäure und Silan-Kupplungsagenzien enthalten. Die in der EP 0 775 725 B1 offenbarten Styrol-Butadien-Copolymere weisen bei Styrolgehalten von mehr als 37 Gew.-% nur einen Hydrierungsgrad von 25 % auf.

In der EP 2 092 013 B1 werden Kautschukmischungen für Fahrzeugluftreifen mit gutem Nassgriff, geringem Rollwiderstand und guten Wintereigenschaften offenbart, die 30 bis 80 phr zumindest eines teilweise hydrierten lösungspolymerisierten Styrol-Butadien-Copolymers mit einem Hydrierungsgrad von mehr als 30 % aufweist. Konkret werden Styrol-Butadien-Copolymere mit einem Hydrierungsgrad von 35 und 67 % beschrieben.

Kieselsäurehaltige Kautschukmischungen für Reifen mit hydrierten lösungspolymerisierten Styrol-Butadien-Copolymeren mit einem hohem Hydrierungsgrad von mehr als 80 % sind beispielsweise aus der EP 3 424 750 A1, der EP 3 181 630 A1, der EP 3 181 631 A1 und der EP 3 741 802 A1 bekannt. Die in diesen Schriften verwendeten Kieselsäure weisen eine Stickstoff-Oberfläche von mehr als 170 m²/g auf.

Aus der EP 1 419 195 B1 sind z. B. Laufstreifenmischungen bekannt, die Kieselsäuren mit einer niedrigen spezifischen Oberfläche (low surface area) enthalten. Die BET-Oberfläche dieser Kieselsäuren ist kleiner als 130 m²/g.

Auch in der EP 1 404 755 A1 wird zur Verbesserung der Reifeneigenschaften eine Kieselsäure mit einer niedrigen spezifischen Oberfläche in Kombination mit einem Kupplungsagens in der Laufstreifenmischung eingesetzt. Die Kieselsäure hat eine BET-Oberfläche von 60 bis 90 m²/g.

Aus der EP 3 156 443 A1 ist es ferner bekannt, eine Kieselsäure mit einer BET-Oberfläche von 115 m²/g in Kombination mit einer Kieselsäure mit einer BET-Oberfläche von 165 m²/g in einer Laufstreifenmischung für Fahrzeugreifen zu verwenden.

Der Erfindung liegt die Aufgabe zugrunde, Kautschukmischungen für die Laufstreifen von Fahrzeugluftreifen bereitzustellen, die sich durch eine verbesserte Zugfestigkeit auszeichnen.

Gelöst wird diese Aufgabe erfindungsgemäß durch eine schwefelvernetzbare Kautschukmischung, insbesondere für den Laufstreifen von Fahrzeugluftreifen, die
- 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers mit einem Hydrierungsgrad von 80 bis 98 %,
- bis zu 80 phr zumindest eines weiteren Dienkautschuks,
- 10 bis 250 phr zumindest eines ersten hellen Verstärkerfüllstoffes mit einer Stickstoff-Oberfläche (BET-Oberfläche) (gemäß DIN ISO 9277 und DIN 66132) von weniger als 105 m²/g und
- 1 bis 15 phf (Gewichtsteile, bezogen auf 100 Gewichtsteile hellen Verstärkerfüllstoffs) zumindest eines Silan-Kupplungsagenzes
enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter Hydrierungsgrad eines Kautschukes ist dabei das Verhältnis der hydrierten Doppelbindungen zu den nicht hydrierten Doppelbindungen zu verstehen.

Aromatische Doppelbindungen der Styrolbausteine werden dabei nicht berücksichtigt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf den vorhandenen hellen Verstärkerfüllstoff, das heißt, dass andere eventuell vorhandene Füllstoffe wie Ruß nicht in die Berechnung der Menge an Silan-Kupplungsagens mit eingehen.

Überraschenderweise wurde gefunden, dass durch den Einsatz eines hydrierten lösungspolymerisierten Styrol-Butadien-Copolymers mit einem sehr hohen Hydrierungsgrad von 80 bis 98 % in Kombination mit einer Kieselsäure mit einer niedrigen Stickstoff-Oberfläche und Silan-Kupplungsagens eine Kautschukmischung erhalten werden kann, deren Vulkanisate sich durch eine verbesserte Zugfestigkeit damit eine verbesserte Produkteigenschaften im Hinblick auf Abrieb und Einreißbeständigkeit auszeichnen.

Die erfindungsgemäße Kautschukmischung bietet zusätzlich den Vorteil, dass sie eine hohe Alterungsbeständigkeit und eine niedrigen Rollwiderstand bei Verwendung als Reifenlaufstreifen aufweist.

Die schwefelvernetzbare Kautschukmischung enthält 20 - 100 phr, vorzugsweise 30 bis 100 phr, zumindest eines teilweise hydrierten lösungspolymerisierten Styrol-Butadien-Copolymers mit einem Hydrierungsgrad von 80 bis 98 %, die nach dem Fachmann bekannten Polymerisations- und Hydrierungsverfahren hergestellt werden können. Es können auch mehrere hydrierte lösungspolymerisierte Styrol-Butadien-Copolymere im Verschnitt eingesetzt werden.

Ein besonders ausgewogenes Verhältnis von Nassgriff und Rollwiderstand bei Verwendung als Reifenlaufstreifen lässt sich erzielen, wenn das hydrierte lösungspolymerisierte Styrol-Butadien-Copolymer einen Hydrierungsgrad von 90 bis 98 % aufweist. Bei diesen Hydrierungsgraden wird ein besonders guter Schutz vor Alterung erzielt.

Für besonders gute Vulkanisat- und Reifeneigenschaften hat es sich als vorteilhaft erwiesen, wenn das hydrierte lösungspolymerisierte Styrol-Butadien-Copolymer eine Styrol-Anteil von 5 bis 40 Gew.-% aufweist.

Die Kautschukmischung enthält bis zu 80 phr zumindest eines weiteren Dienelastomers. Unter Dienelastomeren werden in dieser Schrift hochmolekulare, feste Elastomere (Kautschuke) verstanden. Flüssige Polybutadiene fallen nicht unter diesen Begriff. Als Dienelastomere oder Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den weiteren Dienelastomeren kann es sich z. B. um natürliches Polyisopren und/oder synthetisches Polyisopren und/oder Polybutadien (Butadien-Kautschuk) und/oder nicht oder gering hydriertes Styrol-Butadien-Copolymer (Styrol-Butadien-Kautschuk) und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Gemäß einer bevorzugten Ausführungsform der Erfindung ist das weitere Dienelastomer ausgewählt aus der Gruppe bestehend aus natürlichem Polyisopren, synthetischem Polyisopren, Polybutadien und weiteren Styrol-Butadien-Copolymeren. Die Kautschuke können im Verschnitt eingesetzt werden. Die synthetisch hergestellten Dienelastomere können zudem mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Die schwefelvernetzbare Kautschukmischung enthält 10 bis 250 phr, vorzugsweise 10 bis 100 phr, zumindest eines ersten hellen Verstärkerfüllstoffes mit einer Stickstoff-Oberfläche (BET-Oberfläche) (gemäß DIN ISO 9277 und DIN 66132) von weniger als 105 m²/g, vorzugsweise mit einer Stickstoff-Oberfläche (BET-Oberfläche) (gemäß DIN ISO 9277 und DIN 66132) von 60 bis 105 m²/g, besonders bevorzugt mit einer Stickstoff-Oberfläche (BET-Oberfläche) (gemäß DIN ISO 9277 und DIN 66132) von 60 bis 95 m²/g. Die CTAB-Oberflächen (gemäß ASTM D 3765) solcher Verstärkerfüllstoffe liegen dabei in der Regel bei weniger als 95 m²/g, vorzugsweise zwischen 50 und 95 m²/g. Die Oberfläche dieser Verstärkerfüllstoffe liegt im unteren Bereich solcher Füllstoffe, sie werden daher auch als "low surface area" Verstärkerfüllstoffe bezeichnet. Es können auch mehrere helle Verstärkerfüllstoffe mit dieser Oberflächencharakteristik gleichzeitig in der Mischung eingesetzt werden.

Helle Verstärkerfüllstoffe sind beispielsweise Kieselsäure und unterschiedliche Silikate. Ein besonders ausgewogenes Verhältnis der gewünschten Eigenschaften erhält man, wenn der zumindest eine erste helle Verstärkerfüllstoff Kieselsäure ist. Zum Einsatz kann z. B. Zeosil^{®}1085 der Firma Solvay, Frankreich kommen. Die Kieselsäure hat eine Stickstoff-Oberfläche (BET-Oberfläche) (gemäß DIN ISO 9277 und DIN 66132) von weniger als 105 m²/g und eine CTAB-Oberfläche (gemäß ASTM D 3765) von weniger als 95 m²/g.

Gemäß einer vorteilhaften Weiterbildung der Erfindung enthält die schwefelvernetzbare Kautschukmischung ferner 25 bis 250 phr zumindest eines zweiten hellen Verstärkerfüllstoffes mit einer Stickstoff-Oberfläche (BET-Oberfläche) (gemäß DIN ISO 9277 und DIN 66132) von mehr als 140 m²/g, vorzugsweise mit einer Stickstoff-Oberfläche (BET-Oberfläche) (gemäß DIN ISO 9277 und DIN 66132) von 150 bis 295 m²/g. Die CTAB-Oberflächen (gemäß ASTM D 3765) solcher Verstärkerfüllstoffe liegen dabei in der Regel bei mehr als 130 m²/g, vorzugsweise zwischen 140 und 285 m²/g. Die Oberfläche dieser Verstärkerfüllstoffe liegt im oberen Bereich solcher Füllstoffe, sie werden daher auch als "high surface area" Verstärkerfüllstoffe bezeichnet. Es können auch mehrere helle Verstärkerfüllstoffe mit dieser Oberflächencharakteristik gleichzeitig in der Mischung eingesetzt werden.

Der oder die zweiten hellen Verstärkerfüllstoffe können aus allen bekannten hellen Verstärkerfüllstoffen mit entsprechender Oberfläche, wie z. B. gefällten Silikaten, gefällten Kieselsäuren und pyrogenen Kieselsäuren, ausgewählt werden. Vorzugsweise ist der zumindest eine zweite helle Verstärkerfüllstoff eine Kieselsäure. Damit kann bei Verwendung der Kautschukmischung für Reifenlaufstreifen ein besonders ausgewogenes Verhältnis der Eigenschaften Rollwiderstand und Abrieb erzielt werden. Zum Einsatz können z. B. Zeosil^{®}1165 der Firma Solvay, Frankreich oder Ultrasil^{®} VN3 der Firma Evonik, Deutschland kommen.

Als positiv für das Verarbeitungsverhalten und die späteren Mischungseigenschaften hat es sich erwiesen, wenn die Gesamtmenge an erstem hellen Verstärkerfüllstoff und zweitem hellen Verstärkerfüllstoff 70 bis 250 phr beträgt.

Erfindungsgemäß enthält die Kautschukmischung zur Anbindung des hellen Verstärkerfüllstoffes an das Polymer 1 bis 15 phf zumindest eines Silan-Kupplungsagenzes. Dabei können ein oder mehrere dem Fachmann bekannte Silan-Kupplungsagenzien zum Einsatz kommen. Zu diesen zählen beispielsweise 3-Mercaptopropyltriethoxysilan, 3-Thiocyanato-propyltrimethoxysilan oder 3,3`-Bis(triethoxysilylpropyl)polysulfide mit 2 bis 8 Schwefelatomen, wie z. B. 3,3`-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden. Die Silan-Kupplungsagenzien können dabei auch als Gemisch mit Industrieruß zugesetzt werden, wie z. B. TESPT auf Ruß (Handelsname X50S der Firma Evonik). Auch geblockte oder ungeblockte Mercaptosilane können als Silan-Kupplungsagens eingesetzt werden. Unter ungeblockten Mercaptosilanen sind Silane zu verstehen, die eine -S-H-Gruppe aufweisen, also ein Wasserstoffatom am Schwefelatom.

Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind Acylgruppen. Ein Beispiel für ein geblocktes Mercaptosilan ist 3-Octanoylthio-1-propyltriethoxysilan.

Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Dem Fachmann ist klar, dass sich die Mengenangabe der Silan-Kupplungsagenzien auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Die Kautschukmischung kann außerdem weitere Füllstoffe, wie Ruße, Alumosilicate, Kreide, Stärke, Magnesiumoxid, Titandioxid, Kautschukgele, Kohlenstoffnanoröhrchen, Graphit, Graphene oder sogenannte "carbon-silica dualphase filler" in üblichen Mengen enthalten, wobei die Füllstoffe in Kombination eingesetzt werden können.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

In der Kautschukmischung können Weichmacher und Harze in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N`-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur und 70 °C mittels Durometer gemäß DIN ISO 7619-1
- Rückprallelastizität bei Raumtemperatur und 70°C gemäß DIN 53 512
- Zugfestigkeit bei Raumtemperatur gemäß DIN 53 504
- Reißdehnung/Bruchdehnung bei Raumtemperatur gemäß DIN 53504
- Spannungswert bei 50 %, 100 % und 200 % Dehnung bei Raumtemperatur gemäß DIN 53 504
- Bruchenergiedichte bei Raumtemperatur bestimmt im Zugversuch gemäß DIN 53 504, wobei die Bruchenergiedichte die bis zum Bruch erforderliche Arbeit, bezogen auf das Volumen der Probe, ist
- Abrieb bei Raumtemperatur gemäß DIN 53 516 bzw. neu DIN/ISO 4649

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| nicht hydrierter SSBR ^{a} | phr | 90 | - | 90 | - |
| hydrierter SSBR ^{b} | phr | - | 90 | - | 90 |
| Ruß | phr | 5 | 5 | 5 | 5 |
| Kieselsäure A^{c} | phr | 95 | 95 | 25 | 25 |
| Kieselsäure B^{d} | phr | - | - | 70 | 70 |
| Silan-Kupplungsagens^{e} | phr | 6,8 | 6,8 | 6,8 | 6,8 |
| Weichmacher | phr | 35 | 35 | 25 | 25 |
| Alterungsschutzmittel | phr | 2 | 2 | 2 | 2 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Beschleuniger | phr | 4 | 4 | 4 | 4 |
| Schwefel | phr | 2 | 2 | 2 | 2 |

| **Eigenschaften** | | | | | |
|---|---|---|---|---|---|
| Shorehärte bei RT | ShoreA | 70,3 | 79,1 | 66,4 | 72,3 |
| Shorehärte bei 70 °C | ShoreA | 66,4 | 70,5 | 64,8 | 64,2 |
| Rückprallelastizität bei RT | % | 24 | 27 | 32 | 34 |
| Rückprallelastizität bei 70 °C | % | 49 | 44 | 61 | 52 |
| Zugfestigkeit bei RT | MPa | 13,7 | 17,0 | 13,2 | 19,3 |
| Reißdehnung bei RT | % | 315 | 472 | 220 | 387 |
| Spannungswert bei 50 % | MPa | 1,6 | 2,3 | 1,8 | 2,0 |
| Spannungswert bei 100 % | MPa | 3,2 | 3,4 | 4,3 | 3,8 |
| Spannungswert bei 200 % | MPa | 8,2 | 6,8 | 13,1 | 10,0 |
| Bruchenergiedichte bei RT | J/cm³ | 16,5 | 34,3 | 10,4 | 31,1 |
| Abrieb | mm³ | 110 | 97 | 100 | 76 |

| | | | | | |
|---|---|---|---|---|---|
| ^{a} lösungspolymerisiertes Styrol-Butadien-Copolymer, Styrol-Anteil: 38 Gew.-%, Hydrierungsgrad: 0 %, funktionalisiert mit einer Amino-Gruppe und einer Alkoxysilyl-Gruppe, HPR 350, JSR Corporation ^{b} lösungspolymerisiertes Styrol-Butadien-Copolymer, Styrol-Anteil: 34 Gew.-%, Hydrierungsgrad: 95 %, JSR NT120, JSR Corporation ^{c} VN3, Degussa AG, Deutschland, Stickstoff-Oberfläche: 175 m²/g, CTAB-Oberfläche: 160 m²/g oder Ultrasil^{®} VN3, CTAB 165 m²/g, BET 180 m²/g Evonik ^{d} Zeosil^{®} 1085 MP, CTAB 80 m²/g, BET 90 m²/g, Solvay ^{e} TESPD, 3,3`-Bis(triethoxysilylpropyl)disulfid | | | | | |

Aus den Daten der Tabelle 1 wird ersichtlich, dass durch die Anwesenheit des hydrierten lösungspolymerisierten Styrol-Butadien-Copolymers mit einem Hydrierungsgrad von 80 bis 98 % und Kieselsäure mit kleiner Stickstoff-Oberfläche bei Anwesenheit eines Silan-Kupplungsagenzes überraschenderweise die Zugfestigkeit deutlich verbessert wird (s. 4(E)). Aus den Einzelmaßnahmen war dies keinesfalls zu erwarten. Die höhere Zugfestigkeit der erfindungsgemäßen Mischung hat zur Folge, dass die Vulkanisate ein bessere Reißbeständigkeit und damit eine bessere Haltbarkeit aufweisen. Bei Verwendung der erfindungsgemäßen Mischung als Laufstreifen von Fahrzeugluftreifen hat man zusätzlich den Vorteil eines reduzierten Abriebs, der aus den Einzelmaßnahmen nicht zu erwarten gewesen ist.

## Patentansprüche

1. Schwefelvernetzbare Kautschukmischung, insbesondere für den Laufstreifen von Fahrzeugluftreifen, enthaltend
- 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers mit einem Hydrierungsgrad von 80 bis 98 %,
- bis zu 80 phr zumindest eines weiteren Dienkautschuks,
- 10 bis 250 phr zumindest eines ersten hellen Verstärkerfüllstoffes mit einer Stickstoff-Oberfläche (BET-Oberfläche) (gemäß DIN ISO 9277 und DIN 66132) von weniger als 105 m²/g und
- 1 bis 15 phf (Gewichtsteile, bezogen auf 100 Gewichtsteile hellen Verstärkerfüllstoffs) zumindest eines Silan-Kupplungsagenzes.

2. Kautschukmischung nach Anspruch 1, **dadurch gekennzeichnet, dass** das hydrierte lösungspolymerisierte Styrol-Butadien-Copolymer einen Hydrierungsgrad von 90 bis 98 % aufweist.

3. Kautschukmischung nach Anspruch 1 oder 2, **dadurch gekennzeichnet, dass** das hydrierte lösungspolymerisierte Styrol-Butadien-Copolymer einen Styrol-Anteil von 5 bis 40 Gew.-% aufweist.

4. Kautschukmischung nach zumindest einem der vorhergehenden Ansprüche, **dadurch gekennzeichnet, dass** der weitere Dienkautschuk ausgewählt ist aus der Gruppe, bestehend aus natürlichem Polyisopren, synthetischem Polyisopren, Polybutadien und weiteren Styrol-Butadien-Copolymeren.

5. Kautschukmischung nach zumindest einem der vorhergehenden Ansprüche, **dadurch gekennzeichnet, dass** sie 10 bis 100 phr zumindest eines ersten hellen Verstärkerfüllstoffes mit einer Stickstoff-Oberfläche (BET-Oberfläche) (gemäß DIN ISO 9277 und DIN 66132) von weniger als 105 m²/g enthält.

6. Kautschukmischung nach zumindest einem der vorhergehenden Ansprüche, **dadurch gekennzeichnet, dass** der zumindest eine erste helle Verstärkerfüllstoff eine Stickstoff-Oberfläche (BET-Oberfläche) (gemäß DIN ISO 9277 und DIN 66132) von 60 bis 105 m²/g aufweist.

7. Kautschukmischung nach zumindest einem der vorhergehenden Ansprüche, **dadurch gekennzeichnet, dass** sie als ersten hellen Verstärkerfüllstoff Kieselsäure enthält.

8. Kautschukmischung nach zumindest einem der vorhergehenden Ansprüche, **dadurch gekennzeichnet, dass** sie 25 bis 250 phr zumindest eines zweiten hellen Verstärkerfüllstoffes mit einer Stickstoff-Oberfläche (BET-Oberfläche) (gemäß DIN ISO 9277 und DIN 66132) von mehr als 140 m²/g enthält.

9. Kautschukmischung nach Anspruch 8, **dadurch gekennzeichnet, dass** der zumindest eine zweite helle Verstärkerfüllstoff eine Stickstoff-Oberfläche (BET-Oberfläche) (gemäß DIN ISO 9277 und DIN 66132) von 150 bis 295 m²/g aufweist.

10. Kautschukmischung nach Anspruch 8 oder 9, **dadurch gekennzeichnet, dass** sie als zweiten hellen Verstärkerfüllstoff Kieselsäure enthält.

11. Kautschukmischung nach zumindest einem der Ansprüche 8 bis 10, **dadurch gekennzeichnet, dass** die Gesamtmenge an erstem hellen Verstärkerfüllstoff und zweitem hellem Verstärkerfüllstoff 70 bis 250 phr beträgt.

12. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 11 besteht.

## Claims

1. Sulfur-crosslinkable rubber mixture, especially for the tread of pneumatic vehicle tyres, comprising
- 20-100 phr (parts by weight, based on 100 parts by weight of all of the rubbers in the mixture) of at least one hydrogenated solution-polymerized styrene-butadiene copolymer having a degree of hydrogenation of 80% to 98%,
- up to 80 phr of at least one further diene rubber,
- 10 to 250 phr of at least one first light-coloured reinforcement filler having a nitrogen surface area (BET surface area) (to DIN ISO 9277 and DIN 66132) of less than 105 m²/g and
- 1 to 15 phf (parts by weight, based on 100 parts by weight of light-coloured reinforcement filler) of at least one silane coupling agent.

2. Rubber mixture according to Claim 1, **characterized in that** the hydrogenated solution-polymerized styrene-butadiene copolymer has a degree of hydrogenation of 90% to 98%.

3. Rubber mixture according to Claim 1 or 2, **characterized in that** the hydrogenated solution-polymerized styrene-butadiene copolymer has a styrene content of 5% to 40% by weight.

4. Rubber mixture according to at least one of the preceding claims, **characterized in that** the further diene rubber is selected from the group consisting of natural polyisoprene, synthetic polyisoprene, polybutadiene and further styrene-butadiene copolymers.

5. Rubber mixture according to at least one of the preceding claims, **characterized in that** it contains 10 to 100 phr of at least one first light-coloured reinforcement filler having a nitrogen surface area (BET surface area) (to DIN ISO 9277 and DIN 66132) of less than 105 m²/g.

6. Rubber mixture according to at least one of the preceding claims, **characterized in that** the at least one first light-coloured reinforcement filler has a nitrogen surface area (BET surface area) (to DIN ISO 9277 and DIN 66132) of 60 to 105 m²/g.

7. Rubber mixture according to at least one of the preceding claims, **characterized in that** it contains silica as the first light-coloured reinforcement filler.

8. Rubber mixture according to at least one of the preceding claims, **characterized in that** it contains 25 to 250 phr of at least one second light-coloured reinforcement filler having a nitrogen surface area (BET surface area) (to DIN ISO 9277 and DIN 66132) of more than 140 m²/g.

9. Rubber mixture according to Claim 8, **characterized in that** the at least one second light-coloured reinforcement filler has a nitrogen surface area (BET surface area) (to DIN ISO 9277 and DIN 66132) of 150 to 295 m²/g.

10. Rubber mixture according to Claim 8 or 9, **characterized in that** it contains silica as the second light-coloured reinforcement filler.

11. Rubber mixture according to at least one of Claims 8 to 10, **characterized in that** the total amount of first light-coloured reinforcement filler and second light-coloured reinforcement filler is 70 to 250 phr.

12. Pneumatic vehicle tyre having a tread wherein at least the part that comes into contact with the road consists of a sulfur-vulcanized rubber mixture according to any of Claims 1 to 11.

## Revendications

1. Mélange de caoutchoucs réticulable au soufre, en particulier pour la bande de roulement de pneumatiques à air de véhicules, contenant
- 20 - 100 phr (parties en poids, par rapport à 100 parties en poids de la totalité des caoutchoucs dans le mélange) d'au moins un copolymère styrène/butadiène polymérisé en solution ayant un degré d'hydrogénation de 80 à 98 %,
- jusqu'à 80 phr d'au moins un autre caoutchouc diène,
- 10 à 250 phr d'au moins une première charge renforçante claire ayant une surface à l'azote (surface BET) (selon DIN ISO 9277 et DIN 66132) de moins de 105 m²/g et
- 1 à 15 phf (parties en poids, par rapport à 100 parties en poids de charge renforçante claire) d'au moins un agent de couplage de type silane.

2. Mélange de caoutchoucs selon la revendication 1, **caractérisé en ce que** le copolymère styrène/butadiène hydrogéné, polymérisé en solution, présente un degré d'hydrogénation de 90 à 98 %.

3. Mélange de caoutchoucs selon la revendication 1 ou 2, **caractérisé en ce que** le copolymère styrène/butadiène hydrogéné, polymérisé en solution, présente une teneur en styrène de 5 à 40 % en poids.

4. Mélange de caoutchoucs selon au moins l'une des revendications précédentes, **caractérisé en ce que** l'autre caoutchouc diène est choisi dans le groupe constitué par le polyisoprène naturel, le polyisoprène synthétique, le polybutadiène et d'autres copolymères styrène/butadiène.

5. Mélange de caoutchoucs selon au moins l'une des revendication précédentes, **caractérisé en ce qu'**il contient 10 à 100 phr d'au moins une première charge renforçante claire ayant une surface à l'azote (surface BET) (selon DIN ISO 9277 et DIN 66132) de moins de 105 m²/g.

6. Mélange de caoutchoucs selon au moins l'une des revendications précédentes, **caractérisé en ce que** ladite au moins une première charge renforçante claire présente une surface à l'azote (surface BET) (selon DIN ISO 9277 et DIN 66132) de 60 à 105 m²/g.

7. Mélange de caoutchoucs selon au moins l'une des revendication précédentes, **caractérisé en ce qu'**il contient de la silice en tant que première charge renforçante claire.

8. Mélange de caoutchoucs selon au moins l'une des revendications précédentes, **caractérisé en ce qu'**il contient 25 à 250 phr d'au moins une deuxième charge renforçante claire ayant une surface à l'azote (surface BET) (selon DIN ISO 9277 et DIN 66132) de plus de 140 m²/g.

9. Mélange de caoutchoucs selon la revendication 8, **caractérisé en ce que** ladite au moins une deuxième charge renforçante claire présente une surface à l'azote (surface BET) (selon DIN ISO 9277 et DIN 66132) de 150 à 295 m²/g.

10. Mélange de caoutchoucs selon la revendication 8 ou 9, **caractérisé en ce qu'**il contient de la silice en tant que deuxième charge renforçante claire.

11. Mélange de caoutchoucs selon au moins l'une des revendications 8 à 10, **caractérisé en ce que** la quantité totale de première charge renforçante claire et deuxième charge renforçante claire vaut de 70 à 250 phr.

12. Pneumatique à air de véhicule, comportant une bande de roulement dont au moins la partie qui entre en contact avec la voie de circulation consiste en un mélange de caoutchoucs vulcanisé au soufre selon l'une quelconque des revendications 1 à 11.
